# EUROPÄISCHE PATENTSCHRIFT

(11) **EP 1 015 742 B1**
(45) Veröffentlichungstag und Bekanntmachung des Hinweises auf die Patenterteilung: **27.12.2006**
(21) Anmeldenummer: 97916429.0
(22) Anmeldetag: 03.04.1997
(51) Int. Cl.: F01N 3/32, F02D 9/02, F02B 67/00

(54) **SEKUNDÄRLUFTSYSTEM FÜR EINE BRENNKRAFTMASCHINE**
SECONDARY-AIR SYSTEM FOR AN INTERNAL-COMBUSTION ENGINE
SYSTEME D'AIR SECONDAIRE POUR MOTEUR A COMBUSTION INTERNE

(30) Priorität: 04.04.1996 DE 19613780; 19.07.1996 DE 19629127
(43) Veröffentlichungstag der Anmeldung: 05.07.2000
(73) Patentinhaber: Mann + Hummel GmbH, 71638 Ludwigsburg (DE)
(72) Erfinder: WEBER, Olaf, Michigan 48322, (US); PAFFRATH, Holger, 50259 Pulheim, (DE)
(74) Vertreter: Voth, Gerhard
(86) Internationale Anmeldenummer: PCT/EP1997/001665
(87) Internationale Veröffentlichungsnummer: WO 1997/038212

(56) Entgegenhaltungen:
- EP-A- 0 609 674
- DE-A- 4 219 267
- DE-A- 4 244 458

## Beschreibung

Die Erfindung betrifft ein Sekundärluftsystem für eine Brennkraftmaschine. Es ist bekannt, zur Verbesserung der Aufoxydation der Kohlenwasserstoffe und Kohlenmonoxide sogenannte Sekundärluft, das heißt, zusätzliche Luft auf der Abgasseite der Brennkraftmaschine einzublasen.

Die DE-A-4219267 beschreibt ein System zur Sekundärlufteinblasung für Brennkraftmaschinen, bei dem ein Verdichter von einer als Motor wirkenden Strömungsmaschine angetrieben wird. Die Strömungsmaschine ist parallel zu einem Leitungsabschnitt mit einer Drossel geschaltet, wobei der Leitungsabschnittstromauf eines Drosselstutzens zur Leistungssteuerung angeordnet ist. Die angesaugte Luftmenge wird durch ein Umschaltventil, entweder über die Drossel oder über die Strömungsmaschine geführt.

Ein Nachteil bei dem bekannten System besteht darin, daß durch die zusätzliche Drossel die dem Motor zugeführte Ansaugluft reduziert wird. Außerdem besteht im Ansaugluftstrang ein weiteres Element, das in Abhängigkeit von dem Lastzustand des Motors geregelt werden muß.

Es ist auch bekannt, zur Sekundärlufteinblasung bei Brennkraftmaschinen eine Membranpumpe zu verwenden. Nachteilig bei diesem System ist die erforderliche Anordnung eines Druckspeichers, der damit die Wirtschaftlichkeit des Systems beeinträchtigt.

Der Erfindung liegt die Aufgabe zugrunde,ein gattungsgemäßes Sekundärluftsystem derart auszugestalten, daß kein zusätzliches Drosselsystem für den Antrieb der Turbine erforderlich ist und daß damit auf einfache Weise sowohl die Motorleistung als auch die Leistung der Turbinenpumpen-Einheit geregelt werden kann.

Diese Aufgabe wird ausgehend von dem Oberbegriff des unabhängigen Anspruchs 1 durch dessen kennzeichnenden Merkmale gelöst.

Der wesentliche Vorteil der Erfindung liegt darin, daß nicht ein zusätzliches Drosselsystem für den Antrieb einer Turbine erforderlich ist, sondern bereits vorhandene, ungenutzte Energie zum Antrieb der Turbine genutzt wird.

Eine Ausgestaltung der Erfindung sieht vor, gefilterte Ansaugluft für die Sekundärlufteinblasung zu benutzen. Dies hat den Vorteil, daß der Verschmutzungsgrad des Antriebs der Sekundärluft verringert wird.

Gemäß einer vorteilhaften Weiterbildung der Erfindung wird vorgeschlagen, eine Aufbereitungseinrichtung für die Sekundärluft vorzusehen. Dieses ist zum Beispiel ein zusätzliches Filterelement, welches auf die Bedürfnisse der Pumpe abgestimmt ist. Die Reinluft zum Antrieb der Turbine des Sekundärluftladers kühlt sich bei der Expansion in der Turbine sehr stark ab. Infolgedessen könnte Wasser aus der Ansaugluft auskondensieren oder eventuell gefrieren.

Zur Vermeidung der Ansammlung von Feuchtigkeit wird in einer Weiterbildung der Erfindung vorgeschlagen, einen Wasserabscheider zum Beispiel eine Prallplatte oder ein Vlies auf der Niederdruckseite der Turbine in die Zuleitung der expandierten Luft zum Plenum einzubauen. Es besteht auch die Möglichkeit, einen Eisabscheider in der Form einer Prallplatte oder eines Vlieses auf der Niederdruckseite der Turbine vorzusehen.

In einer weiteren Ausgestaltung der Erfindung wird vorgeschlagen, den Sekundärluftlader mit dem Motorsaugrohr zu einer Einheit zu montieren. Alternativ hierzu besteht auch die Möglichkeit, den Sekundärluftlader mit dem Drosselklappenstutzen in einem Modul zu integrieren. Weitere Varianten sind die Integration des Sekundärluftladers in dem Reinluftrohr, in dem Luftfiltergehäuse oder in der Zylinderkopfabdeckung des Motors.

Selbstverständlich besteht auch die Möglichkeit, den Sekundärluftlader mit einem anderen beliebigen Bauteil zu einer Einheit zu montieren bzw. als Modul zu gestalten.

In einer weiteren Ausgestaltung der Erfindung wird vorgeschlagen, sowohl die Motorleistung als auch die Sekundärluftladerleistung über den dem Sekundärluftlader zugeführten Luftmassenstrom zu regeln.. Die Turbine kann in vorteilhafter Weise in Kunststoffmontagespritzgießtechnik hergestellt werden. Dies bedeutet, daß sämtliche Teile oder eine große Anzahl der Teile in einem einzigen Werkzeug nacheinander spritztechnisch hergestellt werden. Selbstverständlich besteht auch die Möglichkeit, zum Beispiel das Turbinengehäuse aus einem metallischen Werkstoff herzustellen und die bevorzugt verstellbaren Leitschaufeln sowie den Verstellmechanismus in Kunststoffspritzgießtechnik zu produzieren. Denkbar ist auch die Herstellung der Turbine im Kernausschmelzverfahren.

Diese und weitere Merkmale von bevorzugten Weiterbildungen der Erfindung gehen außer aus den Ansprüchen auch aus der Beschreibung und den Zeichnungen hervor. Ausführungsbeispiele allgemeiner Art zeigen die nachfolgenden Figuren 1 bis 3. Die Erfindung wird anhand von Ausführungsbeispielen gemäß Figur 4 und Figur 5 näher erläutert.

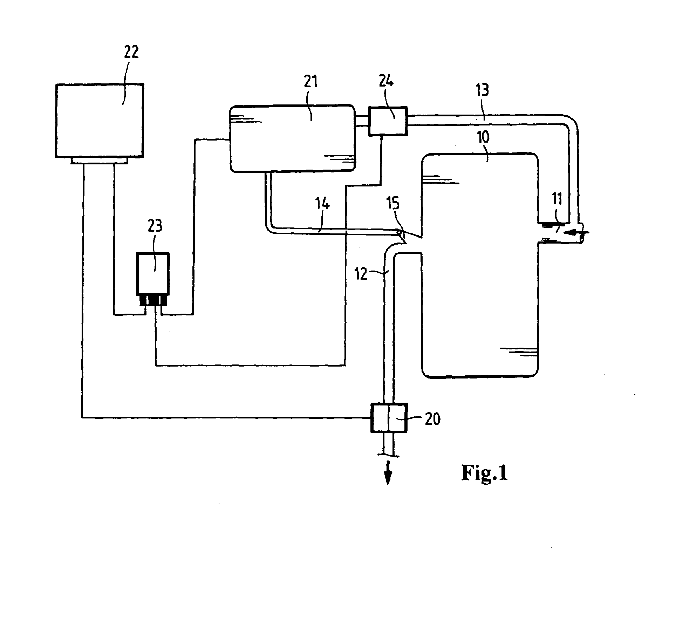

Es zeigt
- Figur 1: ein System zur Sekundärlufteinblasung

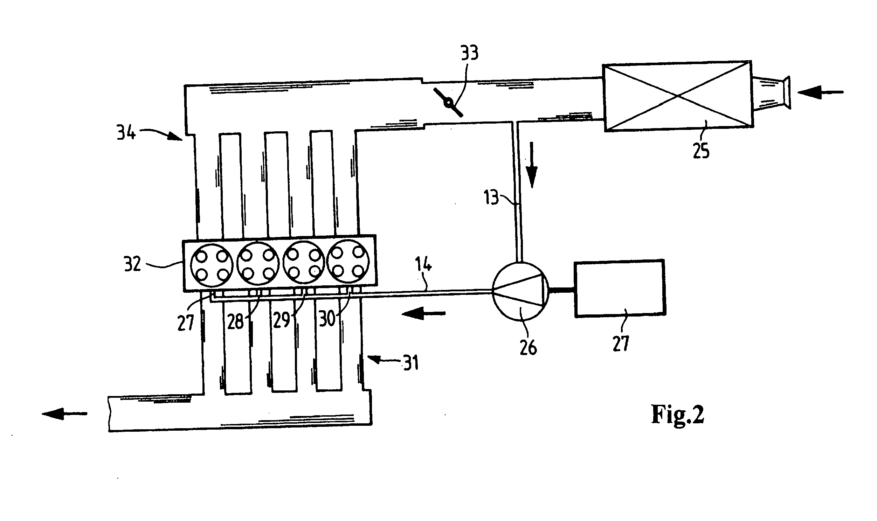

- Figur 2: eine Prinzipskizze eines Sekundärluftsystems mit elektrischer Sekundärluftpumpe

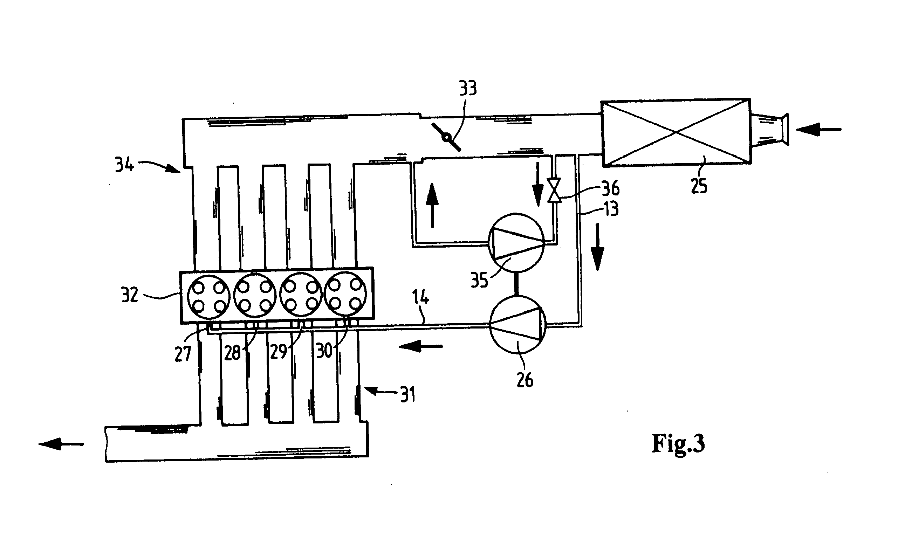

- Figur 3: eine Prinzipskizze eines Sekundärluftsystems mit Sekundärluftlader

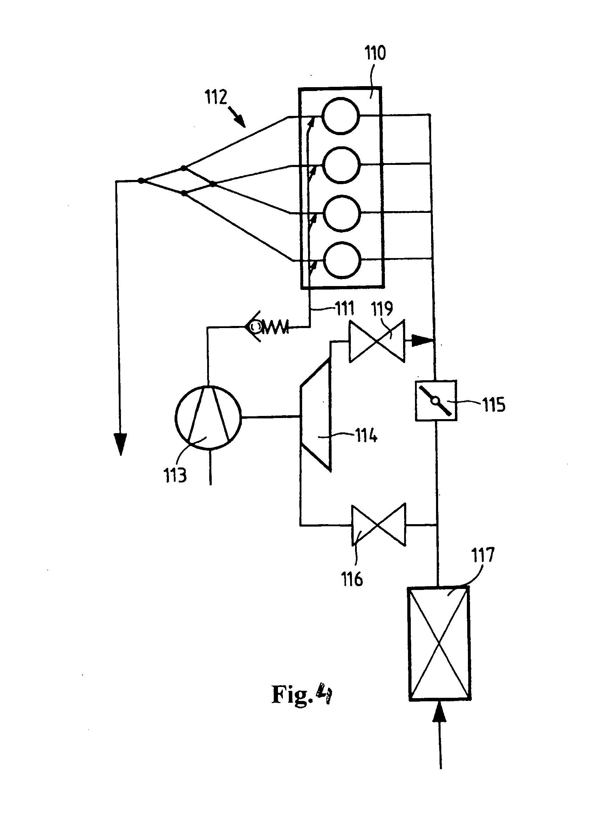

- Figur 4: die schematische Darstellung eines erfindungsgemäßen Sekundärluftsystems

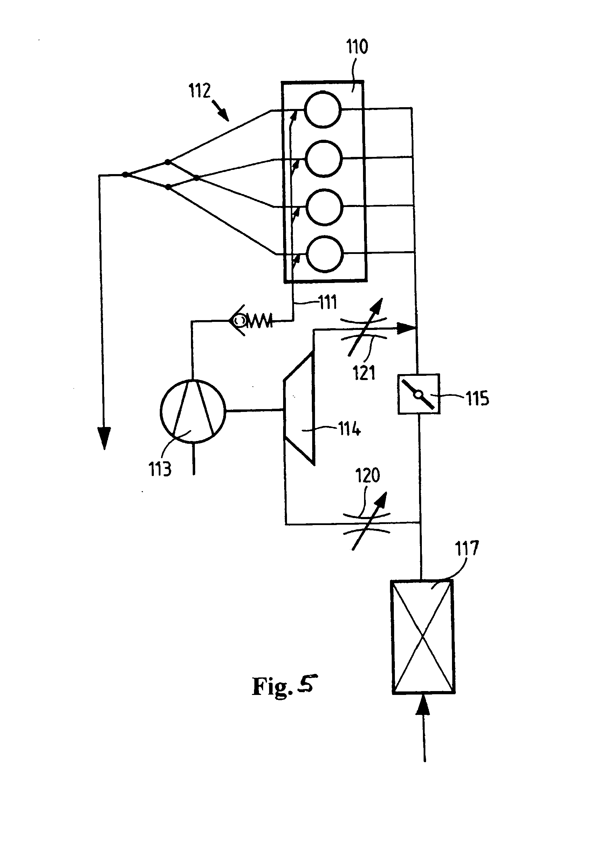

- Figur 5: die schematische Darstellung eines Sekundärluftsystems in einer Variante.

Das System der Sekundärlufteinblasung gemäß Figur 1 zeigt eine schematisch dargestellte Brennkraftmaschine, an welcher reinluftseitig ein Ansaugrohr 11 vorgesehen ist, über die die gereinigte Ansaugluft der Brennkraftmaschine zugeführt wird. Ausgangsseitig ist ein Auspuffkrümmer 12 mit Lambdasonden 20 bestückt. Es ist ferner eine elektrische Sekundärluftpumpe 21 vorgesehen. Diese Luftpumpe wird über ein elektronisches Steuergerät 22 und ein Relais 23 gesteuert. Der elektrischen Sekundärluftpumpe wird Reinluft über die Leitung 13 und ein Schaltventil 24 zugeführt. Diese Reinluft wird verdichtet und über die Leitung 14 an die Einblasstelle 15 geführt. Dort wird diese Reinluft mit dem Abgas vermischt und erzeugt damit eine Aufoxydation der Kohlenwasserstoffe.

Figur 2 zeigt eine Prinzipdarstellung mit einer elektrischen Sekundärluftpumpe. Wie daraus zu entnehmen ist, wird die Reinluft über die Leitung 13 nach dem Luftfilter 25 für die Ansaugluft abgezweigt, der Pumpe 26, welche über den Elektromotor 27 angetrieben wird, zugeführt und von dort über Leitung 14 zu den entsprechenden Einblasstellen 27, 28, 29, 30 an der Abgasseite 31 der Brennkraftmaschine 32 gefördert. Der Ansaugstrang der Brennkraftmaschine 32 besteht aus dem Luftfilter 25, einer Drosselklappe 33, sowie einem Ansaugrohrsystem 34.

Figur 3 zeigt eine Variante eines Sekundärluftsystem mit einem Sekundärluftlader. Die aus Figur 2 entnommenen Teile sind mit gleichen Bezugszeichen versehen. Auch hier wird die Reinluft über die Leitung 13 an die Pumpe bzw. an den Verdichter 26 geführt. Der Verdichter 26 wird mittels einer Turbine 35, die Turbine mittels Ansaugluft gespeist, wobei der Druckunterschied zwischen dem Druck vor der Drosselklappe 33 und dem Saugrohrunterdruck nach der Drosselklappe 33 genutzt wird.

In das Luftversorgungssystem für die Turbine 35 kann selbstverständlich ein Sicherheitsventil 36 oder ein Abschaltventil integriert sein. Auch hier ist eine elektrische Ansteuerung der Ventile möglich, um bei bestimmten Betriebsbedingungen des Motors die Zuführung von Sekundärluft zu sperren.

In der schematischen Darstellung gemäß Figur 4 wird vorgeschlagen, sowohl die Motorleistung als auch die Sekundärluftladerleistung über den dem Sekundärluftlader zugeführten Luftmassenstrom zu regeln. Dazu ist, wie in Figur 4 gezeigt, vor dem Sekundärluftlader (Turbine 114) ein Ventil 116 vorgesehen, ferner ist ein Ventil 119 ausgangsseitig der Turbine 114 angeordnet.

Im geöffneten Zustand der Ventile, oder eines Ventils, erfolgt die Leistungsregelung der Brennkraftmaschine über die Drosselstelle 115. Die Leistung des Sekundärluftladers bzw. der Turbine 114 stellt sich als Folge der Massenstromverteilung ein. Ein Absperrorgan in der Zuleitung zur Turbine, also das Ventil. 116 und das Ventil 119, in der Ableitung nach der Turbine, kann auch Zwischenstellungen annehmen und daher zur Regelung bzw. Steuerung eingesetzt werden.

Figur 5 zeigt Drosselstellen 120, 121, welche den Querschnitt der jeweiligen Leitung verändern. Selbstverständlich genügt auch eine einzige Drosselstelle. Diese ist auf der Niederdruckseite der Turbine 114 angeordnet. Die Regelung der Motor- und Sekundärluftladerleistung erfolgt im Zusammenspiel der beiden Drosseleinrichtungen, d. h. der Drosselstelle 115 und der Drosselstelle 120 bzw. 121.

## Patentansprüche

1. Sekundärluftsystem für eine Brennkraftmaschine, bestehend aus wenigstens einer Leitung zum Einblasen der Sekundärluft in das Abgasrohr der Brennkraftmaschine, einer Förderpumpe und einem Antrieb für die Förderpumpe sowie einer Zuführleitung für die Sekundärluft zur Förderpumpe, wobei der Antrieb für die Förderpumpe eine von der Ansaugluft beaufschlagte Turbine (114) ist, **dadurch gekennzeichnet, dass** die Turbine das Druckgefälle zwischen dem Druck der Ansaugluft der Brennkraftmaschine vor der Drosselklappe und dem Saugrohrunterdruck nach der Drosselklappe nutzt und wobei ein Ventil (119, 121) ausgangsseitig der Turbine (114) angeordnet ist und dieses Ventil auch Zwischenstellungen zur Regelung bzw. Steuerung annehmen kann und wobei dieses Ventil zur Regelung bzw. Steuerung der Leistung des aus Turbine und Pumpe bestehenden Sekundärluftladers und zur teilweisen Regelung der Leistung der Brennkraftmaschine vorgesehen ist.

2. Sekundärluftsystem nach Anspruch 1, **dadurch gekennzeichnet, dass** der Leitung für die Sekundärluft gefilterte Reinluft zugeführt wird.

3. Sekundärluftsystem nach Anspruch 1 oder 2, **dadurch gekennzeichnet, dass** eine Aufbereitungseinrichtung (117) für die Sekundärluft vorgesehen ist, wobei diese Aufbereitungseinrichtung insbesondere einen Luftfilter aufweist.

4. Sekundärluftsystem nach einem der vorherigen Ansprüche, **dadurch gekennzeichnet, dass** vor der Turbine (114) ein Feuchtigkeits- oder Flüssigkeitsabscheider vorgesehen ist.

5. Sekundärluftsystem nach einem der vorherigen Ansprüche, **dadurch gekennzeichnet, dass** das aus Förderpumpe (113) sowie Turbine (114) bestehende Sekundärluftsystem ein Modul ist, welches mit dem Motorsaugrohr oder dem Drosselklappenstutzen der Brennkraftmaschine oder dem Reinluftrohr oder dem Luftfiltergehäuse oder der Zylinderkopfabdeckung der Brennkraftmaschine eine Einheit bildet.

## Claims

1. Secondary air system for an internal combustion engine, said secondary system comprising at least one line for blowing the secondary air into the exhaust gas pipe of the internal combustion engine, a feed pump and a driving means for the feed pump as well as a supply line for supplying the secondary air to the feed pump, wherein the driving means for the feed pump is a turbine (114) that is impinged upon by the intake air, **characterised in that** the turbine utilises the pressure drop between the pressure of the intake air of the internal combustion engine upstream of the throttle flap and the negative pressure of the suction pipe downstream of the throttle flap and wherein a valve (119, 121) is disposed on the outgoing side of the turbine and this valve can also assume intermediate positions for regulating or respectively controlling and wherein this valve is provided for the regulating or respectively controlling of the output of the secondary air charger, which comprises turbine and pump, and for the partial regulating of the output of the internal combustion engine.

2. Secondary air system according to claim 1, **characterised in that** clean filtered air is supplied to the line for the secondary air.

3. Secondary air system according to claim 1 or 2, **characterised in that** a preparatory device (117) is provided for the secondary air, wherein this preparatory device includes more especially an air filter.

4. Secondary air system according to one of the preceding claims, **characterised in that** a moisture or liquid separating means is provided upstream of the turbine (114).

5. Secondary air system according to one of the preceding claims, **characterised in that** the secondary air system that comprises feed pump (113) and turbine (114) is a module, which forms one unit together with the engine intake pipe or the throttle flap connection piece of the internal combustion engine or the filtered air pipe or the air filter housing or the cylinder head cover of the internal combustion engine.

## Revendications

1. Système d'air secondaire pour moteur à combustion interne, comprenant au moins une conduite d'insufflation d'air secondaire dans la conduite d'échappement du moteur à combustion interne, une pompe d'alimentation et un entraînement pour la pompe d'alimentation ainsi qu'une conduite d'alimentation en air secondaire vers la pompe d'alimentation, l'entraînement de la pompe d'alimentation étant une turbine (114) sollicitée par l'air d'admission, **caractérisé en ce que** la turbine utilise la chute de pression entre la pression de l'air d'admission du moteur à combustion interne en amont du papillon des gaz et la dépression du collecteur d'admission en aval du papillon des gaz, et une soupape (119, 121) disposée côté sortie de la turbine (114) peut également prendre des positions intermédiaires de régulation ou de commande, cette soupape étant prévue pour réguler ou commander la puissance du compresseur d'air secondaire composé de la turbine et de la pompe, et pour réguler partiellement la puissance du moteur à combustion interne.

2. Système d'air secondaire selon la revendication 1, **caractérisé en ce que** de l'air pur filtré est amené à la conduite pour l'air secondaire.

3. Système d'air secondaire selon la revendication 1 ou 2, **caractérisé en ce qu'**un dispositif de conditionnement (117) prévu pour l'air secondaire présente en particulier un filtre à air.

4. Système d'air secondaire selon l'une des revendications précédentes, **caractérisé en ce qu'**un séparateur d'humidité ou de liquide est prévu en amont de la turbine (114).

5. Système d'air secondaire selon l'une des revendications précédentes, **caractérisé en ce que** le système d'air secondaire, composé de la pompe d'alimentation (113) et de la turbine (114) est un modèle formant une unité avec le collecteur d'admission du moteur, le boîtier de papillon du moteur à combustion interne, le tuyau d'air pur, le boîtier du filtre à air ou le couvre-culasse du moteur à combustion interne.
